# EUROPÄISCHE PATENTSCHRIFT

(11) **EP 1 030 984 B1**
(45) Veröffentlichungstag und Bekanntmachung des Hinweises auf die Patenterteilung: **09.05.2001**
(21) Anmeldenummer: 98959862.8
(22) Anmeldetag: 09.11.1998
(51) Int. Cl.: F16H 61/06

(54) **VERFAHREN ZUM STEUERN EINES AUTOMATGETRIEBES**
PROCESS FOR CONTROLLING AN AUTOMATIC GEARBOX
PROCEDE DE COMMANDE D'UNE BOITE DE VITESSES AUTOMATIQUE

(30) Priorität: 14.11.1997 DE 19750447
(43) Veröffentlichungstag der Anmeldung: 30.08.2000
(73) Patentinhaber: ZF FRIEDRICHSHAFEN Aktiengesellschaft, 88038 Friedrichshafen (DE)
(72) Erfinder: POPP, Christian, D-88079 Kressbronn (DE); ROSI, Hansjörg, D-88074 Meckenbeuren (DE)
(86) Internationale Anmeldenummer: EP9807137
(87) Internationale Veröffentlichungsnummer: WO9925996

(56) Entgegenhaltungen:
- EP-A- 0 433 603
- EP-A- 0 566 399
- EP-A- 0 790 441
- DE-A- 3 922 051
- DE-A- 4 409 122

## Beschreibung

Die Erfindung betrifft ein Verfahren zum Steuern eines Automatgetriebes, bei dem eine elektronische Getriebesteuerung während eines Schaltüberganges aus einer Getriebeeingangsdrehzahl den Ist-Gradienten bestimmt und über einen Soll-/Ist-Vergleich mit einem Vorgabewert die Abweichung hieraus ermittelt. Die am Schaltübergang beteiligten Kupplungen werden sodann derart geregelt, daß die Abweichung Ist- zu Soll-Gradient der Getriebeeingangsdrehzahl verringert wird.

Bei Automatgetrieben bestimmt die Schaltzeit den Komfort eines Schaltüberganges. Unter Schaltzeit versteht man den Zeitraum, während dem eine Getriebeeingangsdrehzahl sich von einem Drehzahlniveau eines ersten Übersetzungsverhältnisses auf ein Drehzahlniveau eines zweiten Drehzahlverhältnisses verändert. Eine zu kurze Schaltzeit verursacht einen deutlichen Schaltruck, eine zu lange Schaltzeit verursacht einen zu großen Wärmeeintrag in die am Schaltübergang beteiligten Kupplungen. Insofern stellt die Schaltzeit einen Kompromiß zwischen den beiden zuvor genannten Extremen dar. Ein Verfahren zur Steuerung/Regelung eines Schaltübergangs schlägt z. B. die EP-PS 0 339 664 vor. Bei diesem Verfahren wird eine Schaltzeit eingeregelt, indem aus der Getriebeeingangsdrehzahl ein Ist-Gradient berechnet und dieser einem Soll-Gradienten nachgeführt wird. Die EP 0 790 441 A2 offenbart eine elektronische Getriebesteuerung eines Automatikgetriebes, welche, um eine Kupplung des Automatikgetriebes anzusteuern, einen Ist-Gradienten der Drehzahl bestimmt, diesen Ist-Gradienten mit einem Soll-Gradienten vergleicht und in Abhängigkeit von dieser Differenz den Öldruck auf die Kupplung regelt.

In der Praxis hat sich jedoch herausgestellt, daß eine konstante Schaltzeit von manchen Fahrern subjektiv als schlecht empfunden wird. Der Erfindung liegt insofern als Aufgabe zugrunde, das Verhalten des Automatgetriebes enger an das Verhalten des Fahrers zu koppeln.

Eine erste erfindungsgemäß Lösung besteht darin, daß eine elektronische Getriebesteuerung in einer ersten Betriebsart aus Eingangsgrößen des Fahrzeugs und des Fahrers zyklisch eine Fahraktivität berechnet und den Soll-Gradienten der Getriebeeingangsdrehzahl in Abhängigkeit der Fahraktivität verändert. In einer zweiten Betriebsart wählt die elektronische Getriebesteuerung ein Sonderprogramm aus mehreren aus und verändert den Soll-Gradienten der Getriebeeingangsdrehzahl in Abhängigkeit vom ausgewählten Sonderprogramm. Wie im Anspruch 2 ausgeführt, wird hierbei in der ersten Betriebsart der Soll-Gradient in dem Sinne verändert, daß bei einer höheren Fahraktivität ein größerer Soll-Gradient eingestellt wird.

Die erfindungsgemäße Lösung und deren Ausgestaltung bietet den Vorteil, daß ein Fahrer über sein Verhalten die Schaltabläufe bestimmt. Bei einer komfortorientierten Fahrweise ergeben sich somit weiche, lange Schaltungen. Aus einer sportlichen Fahrweise ergeben sich kurze Schaltungen. Bei Automatgetrieben mit einem sogenannten "intelligenten" Schaltprogramm wird zur Auswahl der Schaltpunkte eine Fahraktivität berechnet. Ein derartiges Verfahren ist z. B. aus der DE-PS 39 22 051 bzw. DE-OS 39 41 999 bekannt. Für die erfindungsgemäße Lösung ergibt sich somit als weiterer Vorteil, daß auf die bereits ermittelte Fahraktivität zurückgegriffen und die erfindungsgemäße Lösung somit in eine bestehende Software kostengünstig integriert werden kann.

In einer Ausgestaltung der Erfindung wird vorgeschlagen, daß in der zweiten Betriebsart der Soll-Gradient der Getriebeeingangsdrehzahl in Richtung kleiner Werte verändert wird, wenn eines der folgenden Sonderprogramme aktiv ist: Winterprogramm oder Schlupfregelung der Antriebsräder oder Tempomatfunktion oder Stadtprogramm. Durch diese Ausgestaltung wird bewirkt, daß die Schaltübergänge sehr weich ausgeführt sind und z. B. beim Winterprogramm sicherheitskritische Fahrsituationen verhindert werden.

In einer weiteren Ausgestaltung der Erfindung wird vorgeschlagen, daß in der zweiten Betriebsart der Soll-Gradient der Getriebeeingangsdrehzahl in Richtung großer Werte verändert wird, also im Sinne einer kurzen Schaltzeit, wenn eines der Sonderprogramme Berg/Trailer oder Bergab aktiv ist. Als Vorteil ergibt sich hieraus, daß z. B. beim Bergauffahren mit einem Trailer aufgrund der kurzen Schaltzeit nach dem Schaltübergang ein genügend hohes Beschleunigungsvermögen vorhanden ist.

In einer zweiten erfindungsgemäßen Lösung der Aufgabe wird vorgeschlagen, daß die elektronische Getriebesteuerung den Soll-Gradient der Getriebeeingangsdrehzahl in Abhängigkeit eines mittels eines Programmwahlschalters aktivierten Schaltprogramms verändert. Diese erfindungsgemäße Lösung kann somit vorzugsweise bei konventionellen Automatgetrieben verwendet werden. Bei diesen konventionellen Automatgetrieben hat ein Fahrer die Möglichkeit, über einen Schalter z. B. zwischen einem ökonomischen "E", sportlichen "S" und einem Winterfahrprogramm "W"zu wählen.

In den Figuren ist ein bevorzugtes Ausführungsbeispiel dargestellt.

Es zeigen:
- Fig. 1: System-Schaubild;
- Fig. 2: Tabelle der Kupplungs-Logik;
- Fig. 3: Programm-Ablaufplan für die erste Lösung;
- Fig. 4: Programm-Ablaufplan für die zweite Lösung;
- Fig. 5: Zeit-Diagramm für eine Rückschaltung im Zug;
- Fig. 6: Zeit-Diagramm für eine Hochschaltung im Zug;
- Fig. 7: Zeit-Diagramm für eine Rückschaltung im Schub;
- Fig. 8: Zeit-Diagramm für eine Doppel-Rückschaltung bei konstanter Fahraktivität und
- Fig. 9: Zeit-Diagramm für eine Doppel-Rückschaltung bei sich verändernder Fahraktivität.

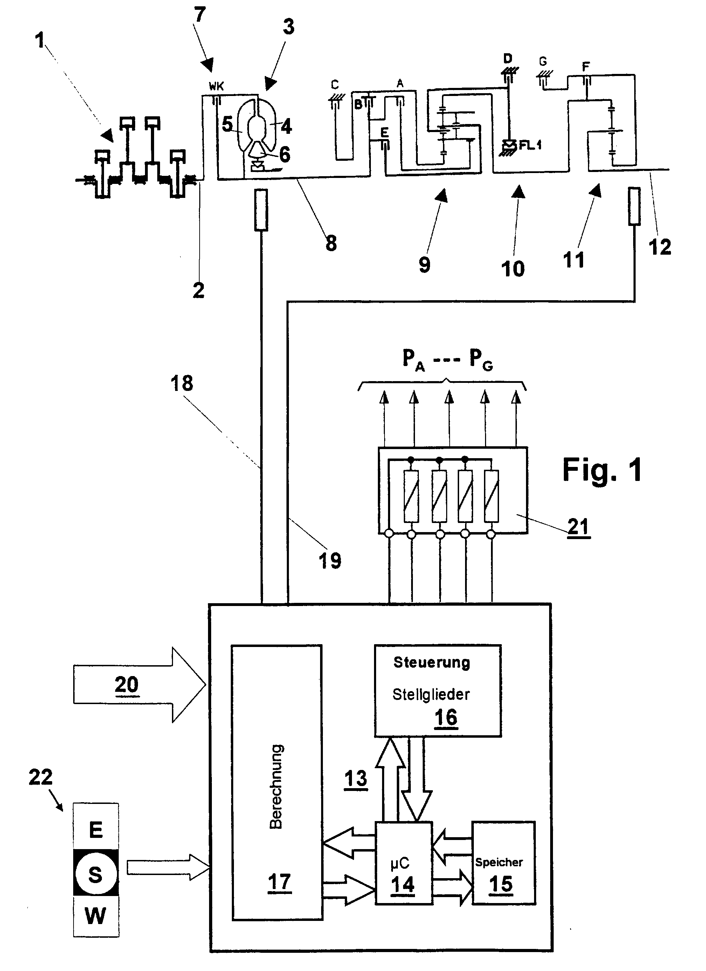

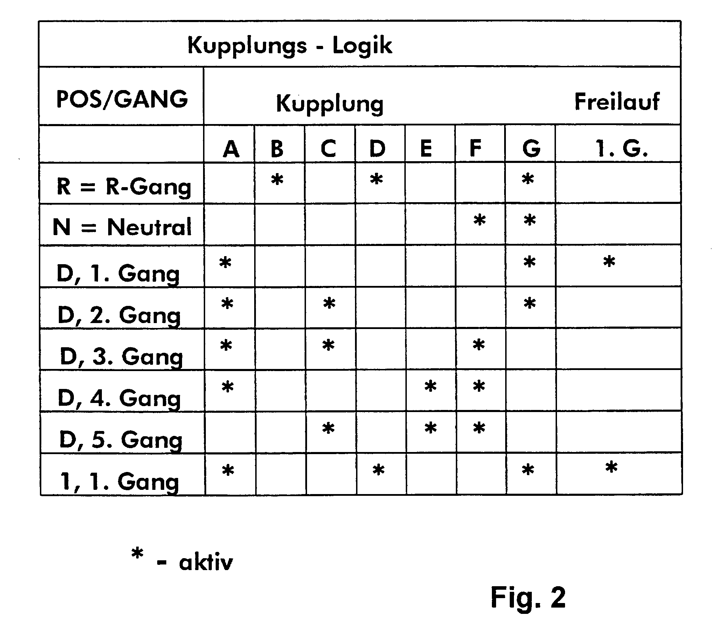

Fig. 1 zeigt ein System-Schaubild eines Automatgetriebes. Dieses besteht aus dem eigentlichen mechanischen Teil, einem hydrodynamischen Wandler 3, einem hydraulischen Steuergerät 21 und einer elektronischen Getriebesteuerung 13. Angetrieben wird das Automatgetriebe von einer Antriebseinheit 1, vorzugsweise Brennkraftmaschine, über eine Antriebswelle 2. Dieses ist mit dem Pumpenrad 4 des hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Parallel zum hydrodynamischen Wandler 3 ist eine Wandlerkupplung 7 angeordnet. Die Wandlerkupplung 7 und das Turbinenrad 5 führen auf eine Turbinenwelle 8. Bei betätigter Wandlerkupplung 7 hat die Turbinenwelle 8 die gleiche Drehzahl wie die Antriebswelle 2. Der mechanische Teil des Automatgetriebes besteht aus Kupplungen und Bremsen A bis G, einem Freilauf 10 (FL1), einem Ravigneaux-Satz 9 und einem nachgeordneten Planetenradsatz 11. Der Abtrieb geschieht über eine Getriebeausgangswelle 12. Diese führt auf ein nicht dargestelltes Differential, welches über zwei Achshalbwellen die Antriebsräder eines nicht dargestellten Fahrzeuges antreiben. Über eine entsprechende Kupplungs-/Brems-Kombination wird eine Gangstufe festgelegt. Die Zuordnung der Kupplungslogik zur Gangstufe ist aus der Fig. 2 ersichtlich. So wird z. B. bei einer Rückschaltung aus dem vierten in den dritten Gang die Bremse C geschlossen und die Kupplung E deaktiviert. Wie weiter aus der Tabelle 2 ersichtlich ist, sind die Schaltungen von der zweiten bis zur fünften Übersetzungsstufe jeweils als Überschneidungsschaltungen ausgeführt. Da der mechanische Teil für das weitere Verständnis der Erfindung nicht relevant ist, wird auf eine detaillierte Beschreibung verzichtet.

Die elektronische Getriebesteuerung 13 wählt in Abhängigkeit der Eingangsgrößen 18 bis 20 eine entprechende Fahrstufe aus. Über das hydraulische Steuergerät 21, in dem sich elektro-magnetische Stellglieder befinden, aktiviert sodann die elektronische Getriebesteuerung 13 eine entsprechende Kupplungs-/Brems-Kombination. Während der Schaltübergänge bestimmt die elektronische Getriebesteuerung 13 den Druckverlauf der an der Schaltung beteiligten Kupplungen/Bremsen. Von der elektronischen Getriebesteuerung 13 sind in stark vereinfachter Form als Blöcke dargestellt:
Micro-Controller 14, Speicher 15, Funktionsblock Steuerung Stellglieder 16 und Funktionsblock Berechnung 17. Im Speicher 15 sind die getrieberelevanten Daten abgelegt. Getrieberelevante Daten sind z. B. Programme, Schaltkennfelder und fahrzeugspezifische Kennwerte als auch Diagnosedaten. Üblicherweise ist der Speicher 15 als EPROM, EEPROM oder als gepufferter RAM ausgeführt. Im Funktionsblock Berechnung 17 werden die für einen Schaltungsverlauf relevanten Daten sowie die Fahraktivität aus den Eingangsgrößen berechnet. Der Funktionsblock Steuerung Stellglieder 16 dient der Ansteuerung der sich im hydraulischen Steuergerät 21 befindenden Stellglieder.
Der elektronischen Getriebesteuerung 13 werden Eingangsgrößen 20 zugeführt. Eingangsgrößen 20 sind z. B. eine den Leistungswunsch des Fahrers repräsentierende Größe, wie etwa die Fahrpedal-/Drosselklappenstellung, oder manuelle Schaltungsanforderungen, das Signal des von der Brennkraftmaschine abgegebenen Moments, die Drehzahl bzw. Temperatur der Brennkraftmaschine usw. Üblicherweise werden die Brennkraftmaschinen-spezifischen Daten von einem Motorsteuergerät bereitstellt. Dieses ist in Fig. 1 nicht dargestellt. Als weitere Eingangsgrößen erhält die elektronische Getriebesteuerung 13 die Drehzahl der Turbinenwelle 18 und der Getriebeausgangswelle 19. Mit Bezugszeichen 22 ist in Fig. 1 alternativ zu einem intelligenten System ein Programmwahlschalter dargestellt, so daß das Verfahren auch für konventionelle Automatgetriebe verwendbar ist.

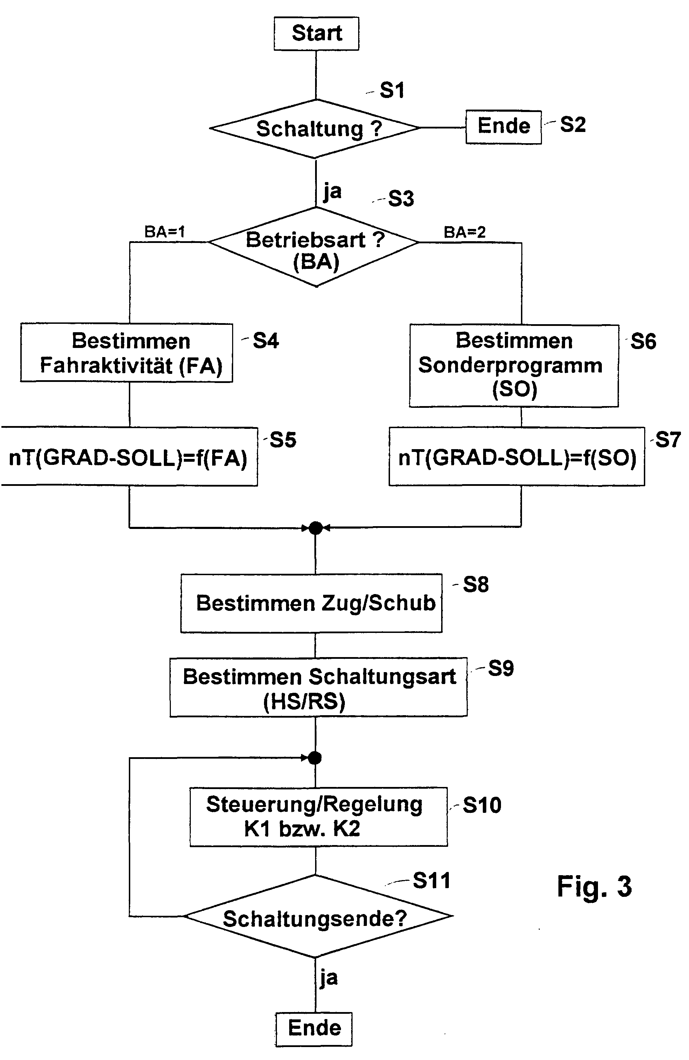

In Fig. 3 ist ein Programm-Ablaufplan für die erste erfindungsgemäße Lösung dargestellt. Diese wird vorzugsweise bei Automatgetrieben mit einem intelligenten Schaltprogramm verwendet. Ein derartiges intelligentes Schaltprogramm ist z. B. aus der DE-PS 39 22 051 bzw. der DE-OS 39 41 999 bekannt. Bei diesem intelligenten Schaltprogramm wird aus fahrzeugspezifischen Größen und dem Verhalten des Fahrers eine Fahraktivität FA bestimmt. Die Fahraktivität FA bestimmt letztendlich den Schaltpunkt des Automatgetriebes.
Der Programm-Ablaufplan beginnt im Schritt S1 mit der Abfrage, ob eine Schaltung angefordert ist. Ist dies nicht der Fall, so wird mit Schritt S2 das Programm beendet. Bei positivem Abfrageergebnis wird im Schritt S3 die Betriebsart BA abgefragt. Ergibt die Abfrage, daß die erste Betriebsart (BA = 1) aktiv ist, wird die Schleife mit S4 und S5 durchlaufen. Wird festgestellt, daß die zweite Betriebsart (BA = 2) aktiv ist, wird die Schleife mit S6 und S7 durchlaufen. Ergibt die Abfrage im Schritt S3, daß die erste Betriebsart aktiv ist, wird im Schritt S4 die Fahraktivität FA bestimmt bzw. die von der elektronischen Getriebesteuerung zur Bestimmung der Schaltpunkte bereits berechnete Fahraktivität verwendet. Im Schritt S5 wird sodann ein Gradienten-Sollwert der Getriebeeingangsdrehzahl nT(GRAD-SOLL) in Abhängigkeit der Fahraktivität eingestellt. In der Praxis ist dies so realisiert, daß eine sportliche Fahrweise zu einer höheren Fahraktivität und somit zu einem größeren Gradienten-Sollwert einer im Sinne kürzeren Schaltzeit führt. Auf der anderen Seite führt eine sehr ökonomische Fahrweise zu einer niederen Fahraktivität und letztendlich zu einem kleinen Gradienten-Sollwert der Getriebeeingangsdrehzahl. Aus Sicherheitsgründen ist der Wertebereich, innerhalb dem der Gradienten-Sollwert verstellt werden kann, durch einen maximalen und minimalen Gradientenwert definiert. Innerhalb dieses Bereichs kann der Gradienten-Sollwert beliebig variiert werden.
Ergibt die Abfrage im Schritt S3, daß die zweite Betriebsart (BA = 2) aktiviert ist, wird im Schritt S6 geprüft, welches Sonderprogramm aktiv ist. Sonderprogramme sind: Winterprogramm, Schlupfregelung der Antriebsräder, Tempomatfunktion, Stadt-/Trailer-Programm, Bergab-Programm und Hochschaltungsverhinderung. Im Schritt S7 wird sodann der Gradienten-Sollwert nt(GRAD-SOLL) der Getriebeeingangsdrehzahl als eine Funktion des Sonderprogramms definiert. Dies ist derart realisiert, daß der Soll-Gradient in Richtung kleinere Werte verändert wird, wenn das Winterprogramm oder die Schlupfregelung der Antriebsräder oder die Tempomatfunktion oder das Stadtprogramm aktiv ist. Ebenfalls in Richtung kleinere Werte wird der Soll-Gradient eingestellt, wenn das Sonderprogramm Hochschaltungsverhinderung beendet ist. Bekanntermaßen verhindert das Sonderprogramm Hochschaltungsverhinderung die Ausführung eines Schaltübergangs. Durch diese Ausgestaltung wird verhindert, daß der Fahrer nach Beendigung der Hochschaltungsverhinderung, z. B. nach Durchfahren einer Kurve, von einer allzu harten Schaltung überrascht wird.
Der Soll-Gradient der Getriebeeingangsdrehzahl wird in Richtung großer Werte verändert, im Sinne einer kürzeren Schaltzeit, wenn das Berg-/Trailer-Programm oder das Bergab-Programm aktiviert sind. Hierdurch wird sichergestellt, daß z. B. beim Bergauffahren mit einem Trailer nach einer Zugrück-Schaltung rasch ein genügend hohes Abtriebsmoment zur Verfügung steht. Im Schritt S8 wird bestimmt, ob die Schaltung als Zug- oder Schubschaltung abläuft. Im Schritt S9 wird bestimmt, ob eine Hoch- oder eine Rückschaltung angefordert ist. Im Schritt S10 werden sodann die an der Schaltung beteiligten Kupplungen, dies sind bei einer Überschneidungsschaltung eine erste öffnende Kupplung K1 und eine zweite schließende Kupplung K2 gesteuert/geregelt. Danach folgt bei Schritt S11 die Abfrage, ob das Schaltungsende, z. B. der Synchronpunkt, erkannt wurde. Ist dies nicht der Fall, so wird eine Warteschleife durchlaufen. Wird Schaltungsende erkannt, so ist das Programm beendet.

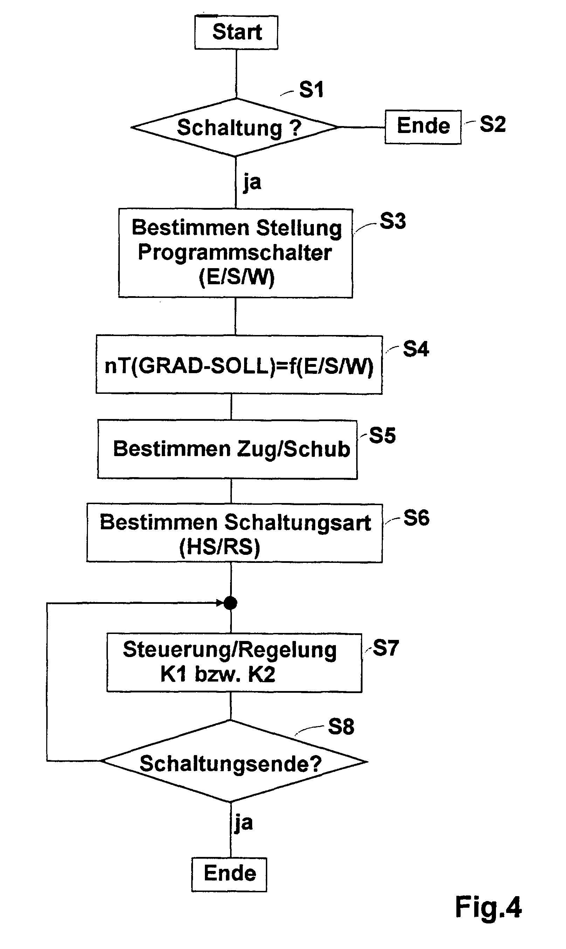

In Fig. 4 ist der Programm-Ablaufplan für die zweite erfindungsgemäße Lösung dargestellt. Diese wird vorzugsweise bei konventionellen Automatgetrieben verwendet, d. h., der Fahrer kann mittels eines Schalters aus drei Programmen auswählen, üblicherweise ein ökonomisches "E", ein sportliches "S" und ein Winterfahrprogramm "W". Bis zum Schritt S3 ist der Programm-Ablaufplan mit dem aus Fig. 3 identisch, so daß das dort Beschriebene gilt. Im Schritt S3 wird sodann bestimmt, in welcher Stellung sich der ProgrammWahlschalter befindet. Im Schritt S4 wird in Abhängigkeit dieses Programm-Wahlschalters der Gradienten-Sollwert nT(GRAD-SOLL) der Getriebeeingangsdrehzahl vorgegeben. In der Praxis ist dies so ausgeführt, daß in der Programm-Schalterstellung "E" und "W" ein sehr kleiner Gradienten-Sollwert im Sinne einer langen Schaltzeit vorgegeben wird. Die Schritte S5 bis S8 sind identisch mit den Schritten S8 bis S11 der Fig. 3, so daß auch dort Beschriebene gilt.

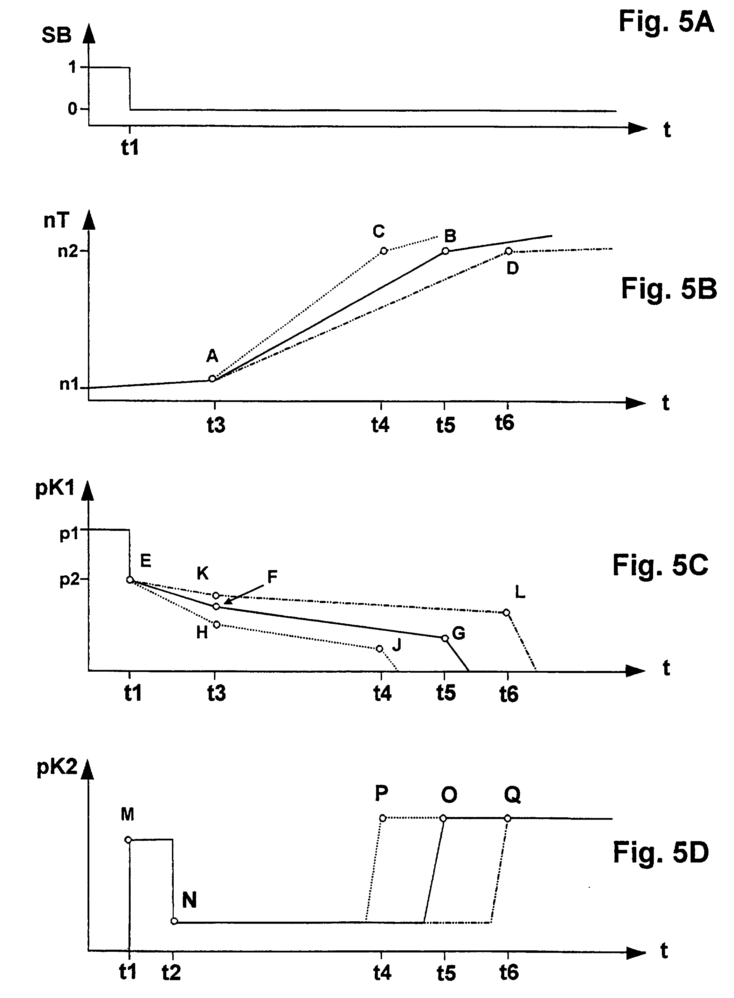

In Fig. 5 ist ein Zeit-Diagramm für eine Rückschaltung im Zug dargestellt. Die Fig. 5 besteht aus den Teil-Fig. 5A bis 5D.
Hierbei zeigen jeweils über der Zeit:
- Fig. 5A: den von der elektronischen Getriebesteuerung ausgegebenen Schaltbefehl SB;
- Fig. 5B: den Verlauf der Getriebeeingangsdrehzahl nT;
- Fig. 5C: den Druckverlauf der ersten abschaltenden Kupplung K1 und
- Fig. 5D: den Druckverlauf der zweiten zuschaltenden Kupplung K2.

In den Fig. 5B, 5C und 5D sind jeweils drei Fallbeispiele dargestellt, wobei gleiche Stricharten zusammengehören.
Das erste Fallbeispiel, in den Fig. 5B bis 5D als durchgezogene Linie ausgeführt, stellt einen Kompromiß zwischen einem sportlichen und einem komfortablen Schaltablauf dar. In Fig. 5B entspricht dies somit dem Kurvenzug mit den Punkten A und B. In Fig. 5C dem Kurvenzug mit den Punkten E, F und G. In Fig. 5D dem Kurvenzug mit den Punkten M, N und O. Der Ablauf ist folgendermaßen: Zum Zeitpunkt t1 gibt die elektronische Getriebesteuerung 13 den Schaltbefehl SB an das Automatgetriebe aus. Dadurch wird das Druckniveau der ersten Kupplung K1 von einem ersten Druckniveau p1 auf ein zweites Druckniveau p2 verringert. Danach beginnt für die erste Kupplung eine negative Druckrampe bis zum Zeitpunkt t3 in Punkt F. Ebenfalls zum Zeitpunkt t1 wird die zweite Kupplung K2 bis zum Zeitpunkt t2 mit einem hohen Druckniveau, dem Schnellfülldruck, beaufschlagt. Danach beginnt die Füllausgleichsphase für die zweite Kupplung K2. Aufgrund des verringerten Druckniveaus der ersten Kupplung K1 beginnt im Zeitpunkt t3 sich die Getriebeeingangsdrehzahl nT zu vergrößern. Im Zeitraum t3 bis t5 wird das Druckniveau der ersten Kupplung K1 gemäß einer zweiten negativen Druckrampe verringert. Kurz vor dem Zeitpunkt t5 wird das Druckniveau der zweiten Kupplung sehr stark erhöht, so daß diese die Brennkraftmaschinen-Last übernimmt, wenn die Getriebeeingangsdrehzahl nT zum Zeitpunkt t5 im Punkt B den Synchronpunkt erreicht hat. Danach bleibt das Druckniveau der zweiten Kupplung K2 konstant auf diesem Druckniveau. Nach dem Zeitpunkt t5 wird die erste Kupplung K1 abgeschaltet.
Das zweite Fallbeispiel, in den Fig. 5B bis 5D als gestrichelte Linie dargestellt, stellt einen Schaltungsablauf bei einer sportlichen Fahrweise, im Sinne einer hohen Fahraktivität FA, dar. In Fig. 5B entspricht dies dem Kurvenzug mit den Punkten A und C. In Fig. 5C dem Kurvenzug mit den Punkten E, H und J und in Fig. 5D dem Kurvenzug mit den Punkten M, N und P. Bis zum Zeitpunkt t3 ist der Ablauf identisch mit dem ersten Fallbeispiel, so daß das dort Beschriebene gilt. Das Druckniveau des Punktes H der ersten Kupplung K1 liegt auf einem niedereren Druckniveau als dasjenige des Punktes F. Als Folge hiervon beginnt sich die Getriebeeingangsdrehzahl nT zum Zeitpunkt t3 rascher zu erhöhen als im ersten Fallbeispiel. Für die erste Kupplung K1 folgt im Zeitraum t3/t4 eine negative Druckrampe, Endpunkt J. Kurz vor dem Zeitpunkt t4 wird das Druckniveau der zweiten Kupplung K2 rasch erhöht, Druckniveau Punkt P, so daß diese im Synchronpunkt, dies entspricht dem Punkt C in Fig. B, die Last sicher übernehmen kann.
Das dritte Fallbeispiel, als strichpunktierte Linie gezeichnet, zeigt einen komfortablen Schaltungsablauf. In Fig. 5B entspricht dies dem Kurvenzug mit den Punkten A und D. In Fig. 5C entspricht dies dem Kurvenzug mit den Punkten E, K und L und in Fig. 5D entspricht dies dem Kurvenzug mit den Punkten M, N und Q. Bis zum Zeitpunkt t3 ist der Verlauf identisch. Zum Zeitpunkt t3 hat die erste Kupplung K1 das Druckniveau des Punktes K erreicht. Das Druckniveau K liegt auf einem höheren Niveau als dasjenige des Punktes F. Als Folge hiervon beginnt sich die Getriebeeingangsdrehzahl nT langsamer zu erhöhen als beim ersten Fallbeispiel. Für die erste Kupplung K1 wirkt im Zeitraum t3 bis t6, in Punkt L, eine negative Druckrampe. Kurz vor dem Zeitpunkt t6 wird das Druckniveau der zweiten Kupplung K2 erhöht, Druckniveau entspricht hierbei dem Punkt Q. Zum Zeitpunkt t6 übernimmt die zweite Kupplung K2 im Synchronpunkt D die Last der Brennkraftmaschine.
In Fig. 5B entspricht hierbei der Kurvenzug A und C dem maximal möglichen Gradienten GRAD(MAX) der Getriebeeingangsdrehzahl nT. Dieser ergibt sich aus dem schnellstmöglichen Hochlauf der Brennkraftmaschine bei der Bedingung, daß die erste Kupplung K1 abgeschaltet ist. Der Kurvenzug mit den Punkten A und D stellt hierbei den kleinstmöglichen Gradienten GRAD(MIN) der Getriebeeingangsdrehzahl nT dar. Dieser ergibt sich aus dem maximal zulässigen Wärmeeintrag der zweiten Kupplung K2. Zwischen diesen beiden Kurvenzügen kann sodann in Abhängigkeit der Fahraktivität FA der Gradienten-Sollwert nT(GRAD-SOLL) der Getriebeeingangsdrehzahl nT beliebig variiert werden.

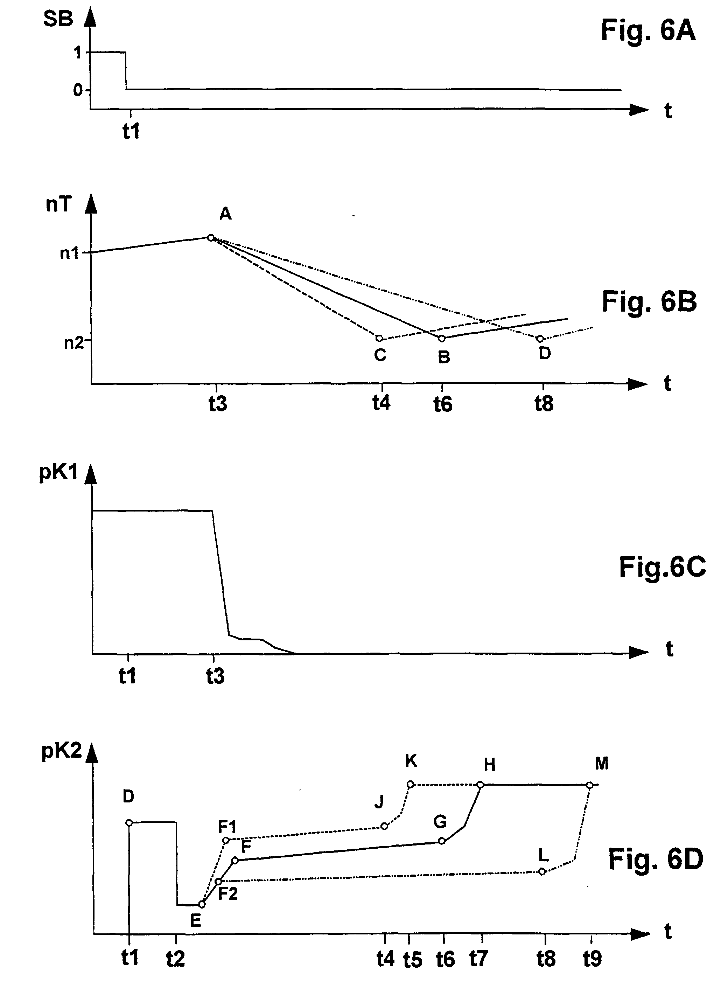

In Fig. 6 ist ein Zeit-Diagramm für eine Hochschaltung im Zug dargestellt.
Hierbei zeigen jeweils über der Zeit:
- Fig. 6A: den von der elektronischen Getriebesteuerung ausgegebenen Schaltbefehl SB;
- Fig. 6B: den Verlauf der Getriebeeingangsdrehzahl nT;
- Fig. 6C: den Druckverlauf der ersten abschaltenden Kupplung K1 und
- Fig. 6D: den Druckverlauf der zweiten zuschaltenden Kupplung K2.

In den Fig. 6B und 6D sind drei Fallbeispiele dargestellt, wobei Linien gleicher Art zusammengehören.

Das erste Fallbeispeil, in Fig. 6B und 6D als durchgezogene Linie ausgeführt, stellt einen Kompromiß zwischen einem sportlichen und einem komfortablen Schaltablauf dar. In Fig. 6B entspricht dies dem Kurvenzug mit den Punkten A und B. In Fig. 6D entspricht dies dem Kurvenzug mit den Punkten D bis H. Der Ablauf ist folgendermaßen: Zum Zeitpunkt tl gibt die elektronische Getriebesteuerung 13 den Schaltbefehl SB an das Automatgetriebe aus. Hierdurch ändert sich in Fig. 6A der Signalverlauf von Eins nach Null. Hierdurch wird die zweite Kupplung K2 bis zum Zeitpunkt t2 mit dem Schnellfülldruck, Druckniveau entspricht hierbei dem Punkt D, befüllt. Danach folgt eine Füllausgleichsphase und eine Druckrampe, Anfangspunkt E und Endpunkt F. Während dieser Druckrampe beginnt die zweite Kupplung K2 die Last zu übernehmen, was daran erkannt wird, daß zum Zeitpunkt t3 im Punkt A die Getriebeeingangsdrehzahl sich zu verändern beginnt. Da die zweite Kupplung K2 die Last zu übernehmen beginnt, kann die erste Kupplung K1 im Zeitpunkt t3 abgeschaltet werden. Mit Erreichen des Druckniveaus des Punktes F der zweiten Kupplung K2 beginnt für diese eine zweite Druckrampe, Endpunkt G. Der Endpunkt G bzw. der Zeitpunkt t6 entspricht hierbei dem Synchronpunkt der zweiten Übersetzungsstufe. Dies entspricht in Fig. 6B dem Punkt B. Mit Erreichen des Synchronpunktes zum Zeitpunkt t6 wird das Druckniveau der zweiten Kupplung K2 stufenweise bis auf das Druckniveau des Punktes H, Zeitpunkt t7, erhöht. Danach ist die Schaltung beendet.

Das zweite Fallbeispiel, in den Fig. 6B und 6D als gestrichelte Linie dargestellt, stellt einen Schaltungsablauf bei einer sportlichen Fahrweise dar. Bis zum Ende der Füllausgleichsphase der zweiten Kupplung K2 ist der Verlauf mit dem ersten Fallbeispiel identisch. Die erste Druckrampe der zweiten Kupplung K2, Anfangspunkt E und Endpunkt F1, ist hierbei jedoch gegenüber dem ersten Fallbeispiel steiler ausgeführt. Dies bewirkt, daß zum Zeitpunkt t3 im Punkt A sich die Getriebeeingangsdrehzahl mit einem größeren Gradienten in Richtung des Synchronpunktes der zweiten Übersetzungsstufe, der Synchronpunkt entspricht dem Punkt C in Fig. 6B, verändert. Mit Erreichen des Druckniveaus F1 der zweiten Kupplung K2 beginnt für diese bis zum Zeitpunkt t4, Endpunkt J, eine zweite Druckrampe. Der Zeitpunkt t4 entspricht hierbei dem Zeitpunkt, wenn die Getriebeeingangsdrehzahl nT den Synchronpunkt C erreicht. Danach wird das Druckniveau der Kupplung K2 rampenförmig bis auf das Druckniveau des Punktes K, Zeitpunkt t5, erhöht. Hier ist die Schaltung dann beendet.

Das dritte Fallbeispiel, in Fig. 6B und 6D als strichpunktierte Linie dargestellt, stellt einen Schaltungsablauf bei einer komfortbewußten Fahrweise dar. Bis zum Ende der Füllausgleichsphase der zweiten Kupplung K2 ist der Verlauf mit dem ersten Fallbeispiel identisch. Die erste Druckrampe der zweiten Kupplung K2, Anfangspunkt E, Endpunkt F2, ist hierbei jedoch zeitlich kürzer ausgeführt als die Druckrampe im ersten Fallbeispiel. Alternativ kann die erste Druckpumpe stattdessen flacher ausgeführt sein. Danach folgt im Punkt F2 bis zum Zeitpunkt t8, Endpunkt L, die zweite Druckrampe der zweiten Kupplung K2. Aufgrund der kürzeren oder flacheren ersten Druckrampe und der flacheren zweiten Druckrampe der zweiten Kupplung K2 verändert sich die Getriebeeingangsdrehzahl nT im Punkt A mit einem kleineren Gradienten. Der Zeitpunkt t8 ist dann erreicht, wenn die Getriebeeingangsdrehzahl nT den Synchronpunkt D der zweiten Übersetzungsstufe ereicht. Danach wird das Druckniveau der zweiten Kupplung K2 rampenförmig auf das Druckniveau des Punktes M, Zeitpunkt t9, erhöht. Danach ist die Schaltung beendet.

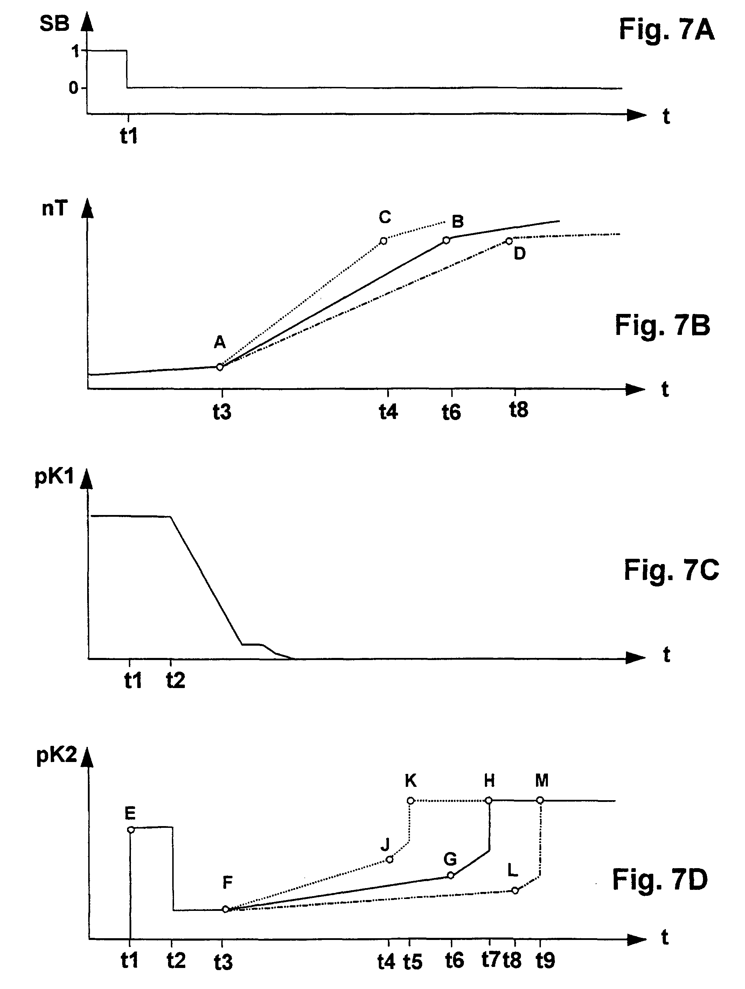

In Fig. 7 ist ein Zeit-Diagramm für eine Rückschaltung im Schub dargestellt. Die Fig. 7 besteht hierbei aus den Teil-Fig. 7A bis 7D.
Hierbei zeigen jeweils über der Zeit:
- Fig. 7A: den von der elektronischen Getriebesteuerung ausgegebenen Schaltbefehl SB;
- Fig. 7B: den Verlauf der Getriebeeingangsdrehzahl nT;
- Fig. 7C: den Druckverlauf der ersten abschaltenden Kupplung K1 und
- Fig. 7D: den Druckverlauf der zweiten zuschaltenden Kupplung K2.

In den Fig. 7B und 7D sind jeweils drei Fallbeispiele dargestellt, wobei gleiche Stricharten zusammengehören.

Das erste Fallbeispiel, in den Fig. 7B und 7D als durchgezogene Linie ausgeführt, stellt einen Kompromiß zwischen einem sportlichen und einem komfortablen Schaltablauf dar. In Fig. 7B entspricht dies dem Kurvenzug mit den Punkten A und B. In Fig. 7D entspricht dies dem Kurvenzug mit den Punkten E bis H. Der Ablauf ist folgendermaßen: Zum Zeitpunkt t1 gibt die elektronische Getriebesteuerung 13 den Schaltbefehl SB an das Automatgetriebe aus. Hierdurch ändert sich in Fig. 7A der Signalverlauf von Eins nach Null. Hierdurch wird die zweite Kupplung K2 bis zum Zeitpunkt t2 mit dem Schnellfülldruck beaufschlagt. Danach folgt bis zum Zeitpunkt t3 eine Füllausgleichsphase, gefolgt von einer ersten Druckrampe, beginnend im Punkt F und Endpunkt G. Mit Ende der Schnellfüllphase der zweiten Kupplung K2, also zum Zeitpunkt t2, wird das Druckniveau der ersten Kupplung K1 rampenförmig auf Null reduziert. Als Folge hiervon beginnt sich die Getriebeeingangsdrehzahl nT zum Zeitpunkt t3 im Punkt A zu erhöhen. Über die erste Druckrampe, Punkte F und G, der zweiten Kupplung K2 wird hierbei der Gradient der Getriebeeingangsdrehzahl bestimmt. Zum Zeitpunkt t6 erreicht die Getriebeeingangsdrehzahl nT den Synchronpunkt B der zweiten Übersetzungsstufe. Zu diesem Zeitpunkt wird dann das Druckniveau der zweiten Kupplung K2 rampenförmig bis auf das Druckniveau des Punktes H erhöht. Dieses ist zum Zeitpunkt t7 erreicht, danach ist die Schaltung beendet.

Das zweite Fallbeispiel, in den Fig. 7B und 7D als gestrichelte Linie dargestellt, stellt einen Schaltungsablauf bei sportlicher Fahrweise dar. Dies entspricht in Fig. 7B dem Kurvenzug mit den Punkten A und C. In Fig. 7D entspricht dies dem Kurvenzug mit den Punkten E, F, J und K. Bis zum Zeitpunkt t3 ist der Verlauf mit dem ersten Fallbeispiel identisch, so daß das dort Beschriebene gilt. Zum Zeitpunkt t3 beginnt für die zweite Kupplung K2 die erste Druckrampe, Anfangspunkt F und Endpunkt J. Diese Druckrampe weist eine größere Steigung auf als die Druckrampe des ersten Fallbeispiels. Hierdurch wird die Getriebeeingangsdrehzahl nT rascher auf den Synchronpunkt C der zweiten Übersetzungsstufe gezogen, mit anderen Worten: Der Gradient der Getriebeeingangsdrehzahl ist gegenüber dem ersten Fallbeispiel erhöht. Mit Erreichen des Synchronpunktes C wird die zweite Kupplung zum Zeitpunkt t4 rampenförmig auf das Druckniveau des Punktes K erhöht. Dieser ist zum Zeitpunkt t5 erreicht, danach ist die Schaltung beendet.

Das dritte Fallbeispiel, in den Fig. 7B und 7D als strichpunktierte Linie dargestellt, stellt einen komfortablen Schaltablauf dar. In Fig. 7B entspricht dies dem Kurvenzug mit den Punkten A und D. In Fig. 7D entspricht dies dem Kurvenzug mit den Punkten E, F, L und M. Bis zum Zeitpunkt t3 ist der Verlauf mit dem ersten und zweiten Fallbeispiel identisch. Zum Zeitpunkt t3 beginnt für die zweite Kupplung K2 die erste Druckrampe, Anfangspunkt F und Endpunkt L. Diese erste Druckrampe der zweiten Kupplung K2 ist hierbei sehr flach ausgelegt. Hierdurch ändert sich im Punkt A die Getriebeeingangsdrehzahl nT weniger stark als im ersten und zweiten Fallbeispiel, d. h. der Gradient der Getriebeeingangsdrehzahl ist somit kleiner. Zum Zeitpunkt t8 erreicht die Getriebeeingangsdrehzahl nT den Synchronpunkt D der zweiten Übersetzungsstufe. Danach wird das Druckniveau der zweiten Kupplung K2 rampenförmig bis auf das Druckniveau des Punktes M, Zeitpunkt t9, erhöht. Danach ist die Schaltung beendet.

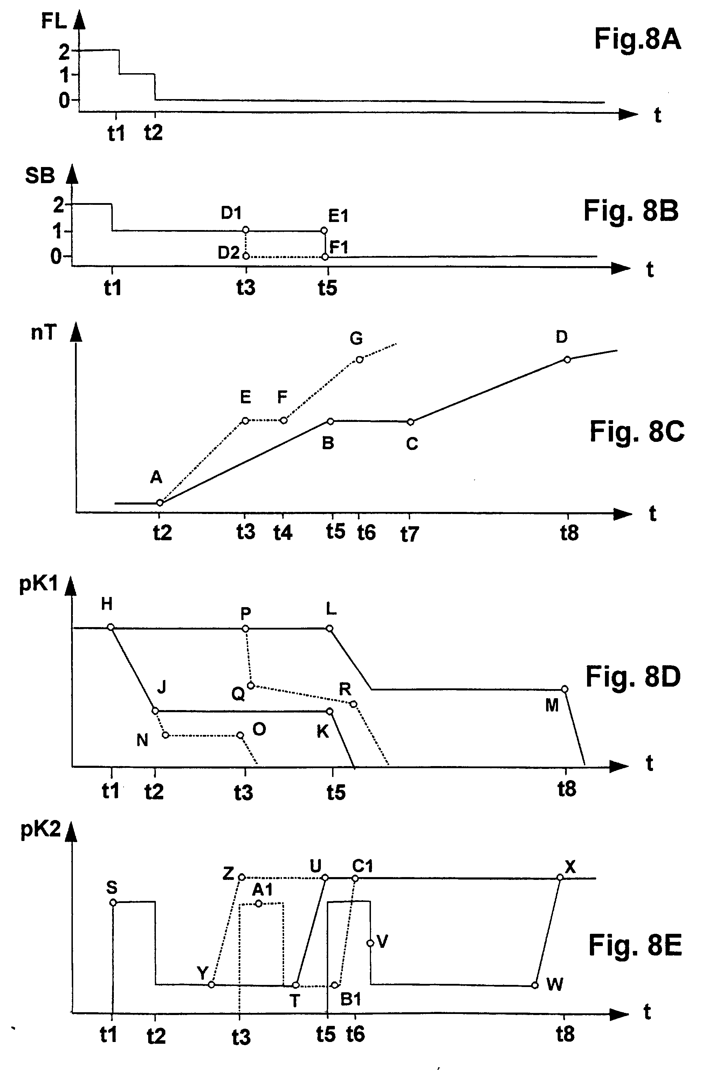

In Fig. 8 ist ein Zeit-Diagramm für eine Doppel-Rückschaltung bei konstanter Fahraktivität dargestellt. Hierbei zeigen jeweils über der Zeit:
- Fig. 8A: den Fahrerwunsch FL;
- Fig. 8B: den von der elektronischen Getriebesteuerung ausgegebenen Schaltbefehl SB;
- Fig. 8C: den Verlauf der Getriebeeingangsdrehzahl nT;
- Fig. 8D: den Druckverlauf der abschaltenden Kupplungen K1 und
- Fig. 8E: den Druckverlauf der zuschaltenden Kupplungen K2.

In den Fig. 8B bis 8E sind hierbei jeweils zwei Fallbeispiele dargestellt, wobei gleiche Stricharten zusammengehören.

Das erste Fallbeispiel, in den Fig. 8B bis 8E als durchgezogene Linie ausgeführt, stellt einen Kompromiß zwischen einem sportlichen und einem komfortablen Schaltablauf dar. In Fig. 8B entspricht dies dem Kurvenzug mit den Punkten D1, E1 und F1. In Fig. 8C entspricht dies dem Kurvenzug mit den Punkten A bis D. In Fig. 8D entspricht dies dem Kurvenzug H, J und K für die erste abschaltende Kupplung und dem Kurvenzug mit den Punkten H, L und M für die zweite abschaltende Kupplung. In Fig. 8E entspricht dies dem Kurvenzug mit den Punkten S, T und U für die erste schließende Kupplung und dem Kurvenzug mit den Punkten V, W und X für die zweite schließende Kupplung. Zum Zeitpunkt tl wünscht der Fahrer, wie in Fig. 8A dargestellt, eine erste und zum Zeitpunkt t2 eine zweite Rückschaltung. Aufgrund des Rückschaltungswunsches wird zum Zeitpunkt t1 die elektronische Getriebesteuerung 13 einen Schaltbefehl SB ausgeben. Dadurch ändert sich in Fig. 8B der Signalpegel von Zwei nach Eins. Aufgrund des Schaltbefehls wird das Druckniveau der ersten Kupplung K1 im Punkt H rampenförmig zum Punkt J verringert. Gleichzeitig beginnt für die zweite Kupplung K2 die Schnellfüllphase, Druckniveau entsprechend dem Punkt S, bis zum Zeitpunkt t2. Zum Zeitpunkt t2 beginnt sich im Punkt A der Verlauf der Getriebeeingangsdrehzahl nT in Richtung des Synchronpunktes B zu verändern. Den Synchronpunkt B erreicht die Getriebeeingangsdrehzahl nT zum Zeitpunkt t5. Während des Zeitraums t2/t5 wird das Druckniveau der ersten Kupplung K1 konstant gehalten. Alternativ hierzu kann der Druckverlauf der ersten Kupplung K1 auch leicht abfallend ausgeführt sein. Kurz vor Erreichen des Synchronpunktes zum Zeitpunkt t5 wird das Druckniveau der zweiten Kupplung K2, entsprechend dem Druckniveau des Punktes T, rampenförmig auf das Druckniveau des Punktes U erhöht. Das Druckniveau des Punktes U ist zum Zeitpunkt t5 erreicht, so daß die zweite Kupplung K2 die Last der Brennkraftmaschine im Synchronpunkt B sicher übernehmen kann. Zum Zeitpunkt t5 ist die erste Rückschaltung abgeschlossen. Mit Erkennen des Synchronpunktes B gibt die elektronische Getriebesteuerung den Schaltbefehl für die zweite Rückschaltung aus. Hierdurch ändert sich der Signalpegel in Fig. 8B von Eins nach Null. Aufgrund des Rückschaltbefehls wird das Druckniveau der ersten Kupplung K1, dies ist die zweite öffnende Kupplung, im Punkt L rampenförmig verringert. Gleichzeitig beginnt für die zweite Kupplung K2, dies ist die zweite schließende Kupplung, die Schnellfüllphase, gefolgt von einer Füllausgleichsphase, die im Punkt W endet. Zum Zeitpunkt t7 beginnt im Punkt C sich die Getriebeeingangsdrehzahl nT in Richtung des neuen Synchronpunktes D zu erhöhen. Kurz vor Erreichen des Synchronpunktes, zum Zeitpunkt t8, wird das Druckniveau der zweiten Kupplung K2 rampenförmig auf das Druckniveau des Punktes X erhöht, so daß diese zum Zeitpunkt t8 die Last der Brennkraftmaschine im Synchronpunkt D sicher erhöhen kann. Ebenfalls zum Zeitpunkt t8 wird im Punkt M die erste Kupplung K1 abgeschaltet. Danach ist die Schaltung beendet.
Im zweiten Fallbeispiel, als gestrichelte Linie gezeichnet, ist ein sportlicher Schaltablauf dargestellt. In Fig. 8B entspricht dies dem Kurvenzug mit den Punkten D1, D2 und F1. In Fig. 8C entspricht dies dem Kurvenzug bei den Punkten A, E, F und G. In Fig. 8D entspricht dies dem Kurvenzug H, N und O für die erste öffnende Kupplung und dem Kurvenzug H, P, Q und R für die zweite öffnende Kupplung. In Fig. 8E entspricht dies dem Kurvenzug mit den Punkten S, Y, Z und U für die erste zuschaltende Kupplung und dem Kurvenzug mit den Punkten A1, B1 und C1 für die zweite zuschaltende Kupplung. Bis zum Zeitpunkt t2 ist der Ablauf identisch mit dem aus dem ersten Fallbeispiel. Im Unterschied zum ersten Fallbeispiel wird jedoch für die erste Kupplung K1 die im Punkt H begonnene negative Druckrampe bis zum Druckniveau des Punktes N reduziert. Dadurch verändert sich im Punkt A die Getriebeeingangsdrehzahl nT rascher als im ersten Fallbeispiel. Kurz vor Erreichen des Synchronpunktes im Punkt E wird die zweite Kupplung K2 vom Druckniveau des Punktes Y auf das Druckniveau des Punktes Z geführt, so daß diese zum Zeitpunkt t3 die Last der Brennkraftmaschine im Synchronpunkt sicher übernehmen kann. Zeitgleich zum Zeitpunkt t3 wird im Punkt O die erste Kupplung K1 abgeschaltet. Ebenfalls zum Zeitpunkt t3 gibt sodann die elektronische Getriebesteuerung den Rückschaltbefehl SB für die zweite Rückschaltung aus. Hierdurch wird die zweite Kupplung K2 mit dem Schnellfülldruck, Druckniveau entsprechend dem Punkt A1, befüllt. Ebenfalls zum Zeitpunkt t3 wird das Druckniveau der ersten Kupplung K1 vom Punkt P auf den Punkt Q verringert. Aufgrund der Totzeit der Hydraulik beginnt die Getriebeeingangsdrehzahl nT erst zum Zeitpunkt t4 im Punkt F sich in Richtung des neuen Synchronpunktes G zu verändern. Kurz vor Erreichen des Synchronpunktes G wird das Druckniveau der zweiten Kupplung K2 vom Druckniveau des Punktes B1 auf den Punkt C1 erhöht, um die Last der Brennkraftmaschine im Synchronpunkt G sicher zu übernehmen. Der Synchronpunkt G ist zum Zeitpunkt t6 erreicht, so daß die erste Kupplung K1 im Punkt R abgeschaltet werden kann. Danach ist die Schaltung beendet.

Wie in Fig. 8C dargestellt, läßt sich somit der Gradient der Getriebeeingangsdrehzahl in Abhängigkeit der Fahraktivität zwischen diesen beiden extremen Kurvenzügen, nämlich A, B, C und D bzw. A, E, F und G verändern.

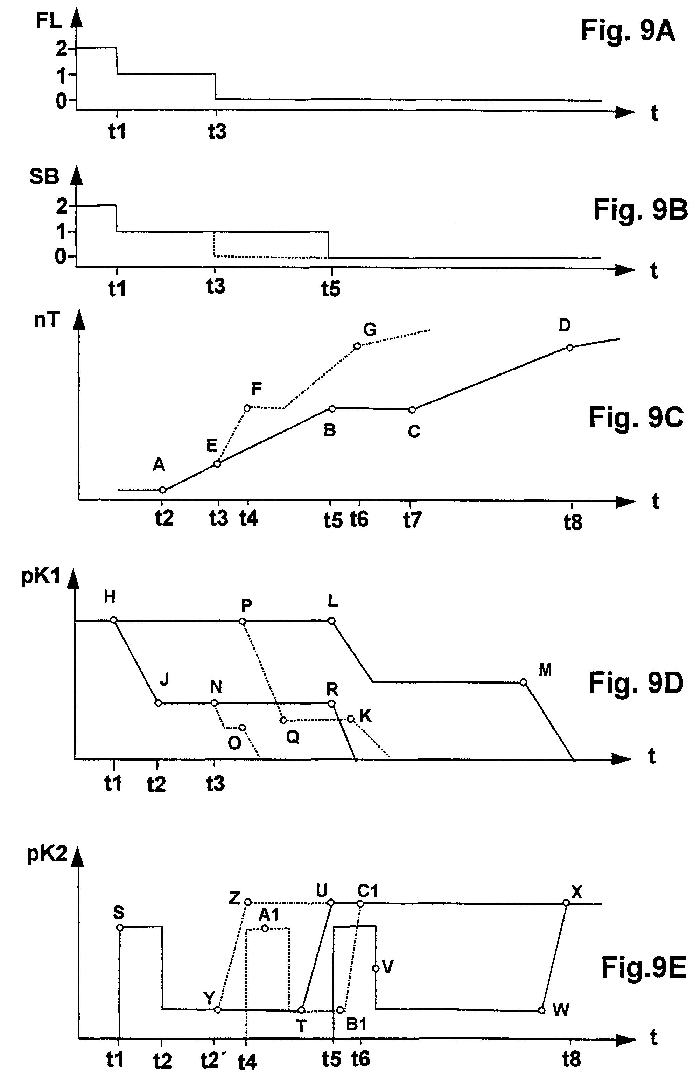

In Fig. 9 ist ein Zeit-Diagramm für eine Doppelrückschaltung im Zug dargestellt. Bei dieser Darstellung wurde davon ausgegangen, daß sich während der Schaltung die Fahraktivität ändert.
Es zeigen hierbei jeweils über der Zeit:
- Fig. 9A: den Leistungswunsch des Fahrers FL;
- Fig. 9B: den Schaltbefehl SB;
- Fig. 9C: den Verlauf der Getriebeeingangsdrehzahl nT;
- Fig. 9D: den Druckverlauf der ersten Kupplung K1 und
- Fig. 9E: den Druckverlauf der zweiten Kupplung K2.

Es sind wiederum in den Fig. 9B bis 9E zwei Fallbeispiele dargestellt.
Das erste Fallbeispiel, als durchgezogene Linie gezeichnet, entspricht hierbei dem ersten Fallbeispiel der Fig. 8, so daß auf eine erneute Schilderung verzichtet wird. Zum Zeitpunkt t3 wünscht der Fahrer eine zweite Rückschaltung. In Fig. 9A ändert sich dadurch der Signalpegel FL von Eins nach Null bzw. die elektronische Getriebesteuerung gibt den Schaltbefehl SB aus. Dies ist in Fig. 9B dargestellt, indem der Signalpegel sich von Eins nach Null verändert. Es wird nun davon ausgegangen, daß sich im Zeitraum t1 bis t3 die Fahraktivität FA erhöht hat. Aufgrund des Schaltbefehls SB wird das Druckniveau der ersten Kupplung K1 im Punkt N rampenförmig auf das Druckniveau des Punktes O verringert. Zum Zeitpunkt t2' wird das Druckniveau der zweiten Kupplung K2 entsprechend der Linie YZ rampenförmig erhöht, so daß diese im Synchronpunkt F zum Zeitpunkt t4 die Last sicher übernehmen kann. Mit Erreichen des Synchronpunktes zum Zeitpunkt t4 wird die zweite Kupplung K2, also die zweite zuschaltende Kupplung, mit dem Schnellfülldruck, Druckniveau entsprechend dem Punkt A1, befüllt. Ebenfalls zum Zeitpunkt t4 wird das Druckniveau der ersten Kupplung K1, hier also der zweiten abschaltenden Kupplung, im Punkt P bis auf das Druckniveau des Punktes Q verringert. Infolgedessen verändert sich die Getriebeeingangsdrehzahl nT nach Ablauf einer Ist-Zeit in Richtung des neuen Synchronpunktes G. Kurz vor Erreichen des Synchronpunktes wird das Druckniveau der zweiten Kupplung K2 vom Druckniveau des Punktes B1 auf das Druckniveau des Punktes C1 geführt, so daß diese die Last im Synchronpunkt G sicher übernehmen kann. Zum Zeitpunkt t6 ist der Synchronpunkt G erreicht, danach ist die Schaltung beendet.

Wie aus Fig. 9C ersichtlich, führt eine Änderung der Fahraktivität unmittelbar zu einer Änderung des Gradienten der Getriebeeingangsdrehzahl. Eine höhere Fahraktivität bewirkt einen größeren Gradienten in dem Sinne, daß die Schaltzeit verringert wird.

In den Figuren 5 bis 9 sind gesteuerte Druckabläufe für die erste und zweite Kupplung K1 bzw. K2 dargestellt. Dem Steuerungsverfahren kann in der Praxis ein Regelverfahren überlagert sein. Das Regelverfahren regelt den Gradienten der Getriebeeingangsdrehzahl nT. In Fig. 5 C würde die erste Kupplung K1, in Fig. 6D die zweite Kupplung K2, in Fig. 7D die zweite Kupplung K2 und in der Fig. 8D die ersten Kupplungen K1 somit zusätzlich geregelt.

### Bezugszeichen

- 1: Antriebseinheit
- 2: Antriebswelle
- 3: hydrodynamischer Wandler
- 4: Pumpenrad
- 5: Turbinenrad
- 6: Leitrad
- 7: Wandlerkupplung
- 8: Turbinenwelle
- 9: Ravigneaux-Satz
- 10: Freilauf FL1
- 11: Planetenradsatz
- 12: Getriebeausgangswelle
- 13: elektronische Getriebesteuerung
- 14: Micro-Controller
- 15: Speicher
- 16: Funktionsblock Steuerung Stellglieder
- 17: Funktionsblock Berechnung
- 18: Turbinendrehzahl-Signal
- 19: Getriebeausgangsdrehzahl-Signal
- 20: Eingangsgrößen
- 21: hydraulisches Steuergerät
- 22: Programmwahlschalter

## Patentansprüche

1. Verfahren zur Steuerung eines Automatgetriebes, bei dem eine elektronische Getriebesteuerung (13) während eines Schaltüberganges aus einer gemessenen Getriebeeingangsdrehzahl (nT) deren Ist-Gradienten (nT(GRAD-IST)) bestimmt, hieraus eine Abweichung zu einem Soll-Gradienten der Getriebeeingangsdrehzahl (nT(GRAD-SOLL)) ermittelt und die am Schaltübergang beteiligten Kupplungen (K1, K2) derart regelt, daß die Abweichung Ist- zu Soll-Gradient der Getriebeeingangdrehzahl verringert wird, dadurch **gekennzeichnet**, daß die elektronische Getriebesteuerung (13) in einer ersten Betriebsart aus Eingangsgrößen zyklisch eine Fahraktivität (FA) berechnet, der Soll-Gradient der Getriebeeingangsdrehzahl (nT(GRAD-SOLL)) in Abhängigkeit der Fahraktivität (FA) verändert wird, die elektronische Getriebesteuerung in einer zweiten Betriebsart ein Sonderprogramm (SKL(SONDER)) aus einer Mehrzahl auswählt und den Soll-Gradient (nT(GRAD-SOLL)) der Getriebeeingangsdrehzahl in Abhängigkeit vom ausgewählten Sonderprogramm (SKL(SONDER)) verändert.

2. Verfahren nach Anspruch 1, dadurch **gekennzeichnet**, daß in der ersten Betriebsart der Soll-Gradient der Getriebeeingangsdrehzahl (nT(GRAD-SOLL)) in dem Sinn verändert wird, daß eine höhere Fahraktivität (FA) einen größeren Soll-Gradienten bewirkt.

3. Verfahren nach Anspruch 2, dadurch **gekennzeichnet**, daß der Soll-Gradient der Getriebeeingangsdrehzahl (nT(GRAD-SOLL) innerhalb eines Wertebereiches verändert werden kann, wobei der Wertebereich durch einen Minimal- (GRAD(MIN)) und Maximalwert (GRAD(MAX)) definiert ist.

4. Verfahren nach Anspruch 1, dadurch **gekennzeichnet**, daß in der zweiten Betriebsart der Soll-Gradient der Getriebeeingangsdrehzahl (nT(GRAD-SOLL)) in Richtung kleiner Werte verändert wird, wenn eines der folgenden Sonderprogramme aktiviert ist:
- Winterprogramm oder
- Schlupfregelung der Antriebsräder oder
- Tempomatfunktion oder
- Stadtprogramm.

5. Verfahren nach Anspruch 1, dadurch **gekennzeichnet**, daß in der zweiten Betriebsart bei Beendigung eines Sonderprogramms Hochschaltungsverhinderung beim darauffolgenden Schaltübergang der Soll-Gradient der Getriebeeingangsdrehzahl (nT(GRAD-SOLL)) in Richtung kleiner Werte verändert wird.

6. Verfahren nach Anspruch 1, dadurch **gekennzeichnet**, daß in der zweiten Betriebsart der Soll-Gradient der Getriebeeingangsdrehzahl (nT(GRAD-SOLL)) in Richtung großer Werte verändert wird, wenn eines der folgenden Sonderprogramme aktiviert ist:
- Berg-/Trailer-Programm oder
- Bergabprogramm.

7. Verfahren nach dem Oberbegriff von Anspruch 1, dadurch **gekennzeichnet**, daß die elektronische Getriebesteuerung (13) den Soll-Gradient der Getriebeeingangsdrehzahl (nT(GRAD-SOLL)) in Abhängigkeit eines mittels eines Programmwahlschalters (22) aktivierten Schaltprogrammes (E/S/W) verändert.

## Claims

1. Method of controlling an automatic transmission, in which an electronic transmission controller (13) during a gear shift determines from a measured transmission input speed (nT) the actual gradient (nT(GRAD-IST)) of the latter, on said basis establishes a variation from a setpoint gradient of the transmission input speed (nT(GRAD-SOLL)) and adjusts the clutches (K1, K2) involved in the gear shift in such a way that the variation of the actual from the setpoint gradient of the transmission input speed is reduced, characterized in that the electronic transmission controller (13) in a first operating mode cyclically calculates a driving activity (FA) from input variables, the setpoint gradient of the transmission input speed (nT(GRAD-SOLL)) is varied as a function of the driving activity (FA), the electronic transmission controller in a second operating mode selects from a plurality of programs a special program (SKL(SONDER)) and varies the setpoint gradient (nT(GRAD-SOLL)) of the transmission input speed as a function of the selected special program (SKL(SONDER)).

2. Method according to claim 1, characterized in that in the first operating mode the setpoint gradient of the transmission input speed (nT(GRAD-SOLL)) is varied in the sense that a higher driving activity (FA) gives rise to a greater setpoint gradient.

3. Method according to claim 2, characterized in that the setpoint gradient of the transmission input speed (nT(GRAD-SOLL)) may be varied within a range of values, wherein the range of values is defined by a minimum value (GRAD(MIN)) and maximum value (GRAD(MAX)).

4. Method according to claim 1, characterized in that in the second operating mode the setpoint gradient of the transmission input speed (nT(GRAD-SOLL)) is varied in the direction of low values when one of the following special programs is activated:
- winter program or
- traction control of driving wheels or
- cruise control function or
- urban program.

5. Method according to claim 1, characterized in that in the second operating mode, at the end of a special program "upshift prevention at next gear shift", the setpoint gradient of the transmission input speed (nT(GRAD-SOLL)) is varied in the direction of low values.

6. Method according to claim 1, characterized in that in the second operating mode the setpoint gradient of the transmission input speed (nT(GRAD-SOLL)) is varied in the direction of high values when one of the following special programs is activated:
- mountain/trailer program or
- downhill program.

7. Method according to the preamble of claim 1, characterized in that the electronic transmission controller (13) varies the setpoint gradient of the transmission input speed (nT(GRAD-SOLL)) as a function of a shift program (E/S/W) activated by means of a program selector switch (22).

## Revendications

1. Procédé pour commander une transmission automatique, dans lequel, pendant une transition de changement de rapport, une commande de transmission électronique (13) détermine, à partir d'une vitesse de rotation mesurée d'entrée de la transmission (nT), le gradient réel de cette vitesse (nT (GRAD-IST)), calcule d'après cela un écart par rapport à un gradient de consigne de la vitesse de rotation d'entrée de la transmission (nT(GRAD-SOLL)) et règle les embrayages (K1, K2) participant à la transition de changement de rapport de telle manière que l'écart entre le gradient réel et le gradient de consigne de la vitesse de rotation d'entrée de la transmission soit réduit, **caractérisé** en ce que, dans un premier mode de travail, la commande électronique (13) de la transmission calcule cycliquement une activité de conduite (FA) à partir de variables d'entrée, le gradient de consigne de la vitesse de rotation d'entrée de la transmission (nT(GRAD-SOLL)) étant modifié en fonction de l'activité de conduite (FA), tandis que, dans un deuxième mode de travail, la commande de transmission électronique sélectionne un programme spécial (SKL(SONDER)) dans une pluralité de programmes et modifie le gradient de consigne (nT(GRAD-SOLL)) de la vitesse de rotation d'entrée de la transmission en fonction du programme spécial sélectionné (SKL(SONDER)).

2. Procédé selon la revendication 1, **caractérisé** en ce que, dans le premier mode de travail, le gradient de consigne de la vitesse de rotation d'entrée de la transmission (nT(GRAD-SOLL)) est modifié dans un sens tel qu'une plus haute activité de conduite (FA) engendre un plus grand gradient de consigne.

3. Procédé selon la revendication 2, **caractérisé** en ce que le gradient de consigne de la vitesse de rotation d'entrée de la transmission (nT (GRAD-SOLL)) peut être modifié dans les limites d'une plage de valeurs, la plage de valeurs étant définie par une valeur minimale (GRAD (MIN)) et une valeur maximale (GRAD (MAX)).

4. Procédé selon la revendication 1, **caractérisé** en ce que, dans un deuxième mode de travail, le gradient de consigne de la vitesse de rotation d'entrée de la transmission (nT(GRAD-SOLL)) est modifié en direction des petites valeurs lorsqu'un des programmes spéciaux suivants est activé :
- programme d'hiver ou
- régulation du glissement des roues motrices ou
- fonction Tempomat ou
- programme ville.

5. Procédé selon la revendication 1, **caractérisé** en ce que, dans le deuxième mode de travail, lors de l'achèvement d'un programme spécial d'interdiction du changement de rapport en montée, au moment de la transition de changement de rapport suivante, le gradient de consigne de la vitesse de rotation d'entrée de la transmission (nT(GRAD-SOLL)) est modifié en direction des petites valeurs.

6. Procédé selon la revendication 1, **caractérisé** en ce que, dans le deuxième mode de travail, le gradient de consigne de la vitesse de rotation d'entrée de la transmission (nT(GRAD-SOLL)) est modifié en direction des grandes valeurs lorsqu'un des programmes spéciaux suivants est activé :
- programme côte/remorque ou
- programme descente.

7. Procédé selon le préambule de la revendication 1, **caractérisé** en ce que la commande de transmission électronique (13) modifie le gradient de consigne de la vitesse de rotation d'entrée de la transmission (nT(GRAD-SOLL)) en fonction d'un programme de changement (E/S/VV) activé au moyen d'un sélecteur de programme (22).
